# EUROPÄISCHE PATENTSCHRIFT

(11) **EP 1 268 625 B1**
(45) Veröffentlichungstag und Bekanntmachung des Hinweises auf die Patenterteilung: **06.04.2005**
(21) Anmeldenummer: 01966767.4
(22) Anmeldetag: 29.03.2001
(51) Int. Cl.: C08J 9/18, C08J 9/224, C08L 23/02

(54) **VERFAHREN ZUR HERSTELLUNG VON EXPANDIERTEN ODER EXPANDIERBAREN POLYOLEFIN-PARTIKELN**
METHOD FOR PRODUCING EXPANDED OR EXPANDABLE POLYOLEFIN PARTICLES
PROCEDE POUR PRODUIRE DES PARTICULES DE POLYOLEFINE EXPANSEES OU EXPANSIBLES

(30) Priorität: 07.04.2000 DE 10017428
(43) Veröffentlichungstag der Anmeldung: 02.01.2003
(73) Patentinhaber: BASF AKTIENGESELLSCHAFT, 67056 Ludwigshafen (DE)
(72) Erfinder: BRAUN, Frank, 67063 Ludwigshafen (DE)
(86) Internationale Anmeldenummer: PCT/EP2001/003591
(87) Internationale Veröffentlichungsnummer: WO 2001/077213

(56) Entgegenhaltungen:
- DATABASE WPI Section Ch, Week 199925 Derwent Publications Ltd., London, GB; Class A14, AN 1999-296580 XP002172327 & JP 11 100468 A (KANEKA CORP), 13. April 1999 (1999-04-13)
- DATABASE WPI Section Ch, Week 198802 Derwent Publications Ltd., London, GB; Class A17, AN 1988-010455 XP002172328 & JP 62 273235 A (KANEGAFUCHI CHEM KK), 27. November 1987 (1987-11-27)
- PATENT ABSTRACTS OF JAPAN vol. 1996, no. 09, 30. September 1996 (1996-09-30) & JP 08 120112 A (DAIWABO CO LTD;MORIKAWA SHOTEN:KK), 14. Mai 1996 (1996-05-14)
- PATENT ABSTRACTS OF JAPAN vol. 018, no. 430 (C-1236), 11. August 1994 (1994-08-11) & JP 06 128400 A (IZUMIYA YAKUHIN KK), 10. Mai 1994 (1994-05-10)

## Beschreibung

Die Erfindung betrifft ein Verfahren zur Herstellung von expandierten oder expandierbaren Polyolefin(PO)-Partikeln durch Imprägnieren von PO-Granulat mit einem flüchtigen Treibmittel in Suspension unter Druck bei erhöhter Temperatur.

Das genannte Verfahren ist an sich bekannt und wird in großtechnischem Maßstab betrieben. Nach EP-A 53 333, EP-A 123 144 und DE-A 34 31 245 bzw. DE-A 199 50 420 werden als Treibmittel organische Verbindungen, wie Halogenkohlenwasserstoffe, z.B. Dichlordifluormethan, oder Kohlenwasserstoffe, z.B. Butan eingesetzt. Das Suspensionsmedium ist Wasser, es kann auch im Gemisch mit Alkoholen angewandt werden. Stets enthält die Suspension ein Suspendierhilfsmittel, welches verhindern soll, daß das PO-Granulat in der Suspension zusammenbackt bzw. agglomeriert. Geeignete Suspensionsstabilisatoren sind wasserunlösliche anorganische Verbindungen, wie Erdalkalimetallcarbonate, -phosphate oder -oxide, die zusammen mit einem ionischen Tensid, z.B. einem Sulfonat, eingesetzt werden.

Dieses Stabilisatorsystem hat allerdings einen gravierenden Nachteil: Der feinteilige Feststoff setzt sich auf der Polymeroberfläche ab und verhindert somit das Verschweißen der Partikel bei der anschließenden Verarbeitung zu Formteilen. Daher muß der Feststoff vor der Verarbeitung von der Oberfläche entfernt werden, was in der Praxis durch eine Säurewaschung geschieht. Dies führt zu einer starken Abwasserbelastung durch die Säure und das verwendete Stabilisatorsystem.

Der Erfindung lag daher die Aufgabe zugrunde, diesen Nachteil zu vermeiden. Diese Aufgabe wird erfindungsgemäß durch Zusatz eines Carboxyl- oder Carboxylat-Gruppen enthaltenden Polymerisats bei der Imprägnierung oder nach der Imprägnierung gelöst.

Gegenstand der Erfindung ist daher ein Verfahren zur Herstellung von expandierten oder expandierbaren PO-Partikeln durch Imprägnieren von PO-Granulat mit einem flüchtigen Treibmittel in wäßriger Suspension in Gegenwart einer wasserunlöslichen anorganischen Verbindung in Kombination mit einem Tensid als Suspendierhilfsmittel bei erhöhter Temperatur unter Druck, gegebenenfalls Abkühlen und anschließendem Entspannen, wobei die Imprägnierung in Gegenwart eines Carboxyl- oder Carboxylat-Gruppen enthaltenden Polymerisats durchgeführt wird.

Ein weiterer Gegenstand der Erfindung ist ein Verfahren zur Herstellung von expandierten oder expandierbaren PO-Partikeln durch Imprägnieren von PO-Granulat mit einem flüchtigen Treibmittel in wäßriger Suspension in Gegenwart einer wasserunlöslichen anorganischen Verbindung in Kombination mit einem Tensid als Suspendierhilfsmittel bei erhöhter Temperatur unter Druck, gegebenenfalls Abkühlen und anschließendem Entspannen, wobei die Partikel nach der Abtrennung vom Suspensionsmedium mit einer wäßrigen Lösung eines Carboxyl- oder Carboxylat-Gruppen enthaltenden Polymerisats gewaschen werden.

Polyolefine im Sinne der vorliegenden Erfindung sind
a) Homopolypropylen,
b) Randomcopolymere des Propylens mit 0,1 bis 15, vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung von a) oder b) mit 0,1 bis 75, vorzugsweise 3 bis 50 Gew.-% eines Polyolefin-Elastomeren, z.B. eines Ethylen/Propylen-Blockcopolymeren mit 30 bis 70 Gew.-% Propylen.
d) Polyethylen (PE-LLD, -LD, -MD, -HD) und
e) Mischung aus den unter a) bis d) genannten Polyolefinen (gegebenenfalls nach Zugabe von Phasenvermittlern).

Bevorzugt sind Homo- und Copolymere des Propylens mit bis zu 15 Gew.-%, insbesondere 1 bis 5 Gew.-% Ethylen und/oder Buten-1.

Der Kristallitschmelzpunkt (DSC-Maximum) der unter a) bis e) aufgelisteten Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bei der Herstellung der expandierten bzw. expandierbaren PO-Partikel geht man von PO-Granulat aus, welches vorzugsweise mittlere Durchmesser von 0,2 bis 10, insbesondere 0,5 bis 5 mm aufweist. In einem Rührreaktor werden 100 Gew.-Teile dieses Granulats in 100 bis 500 Gew.-Teilen des Suspendiermediums dispergiert. Bevorzugtes Suspendiermedium ist wasser, es kann auch im Gemisch mit organischen Flüssigkeiten, wie z.B. Ethanol und Methanol, angewandt werden. Das Suspendiermedium enthält Suspendierhilfsmittel, vorzugsweise in Mengen von 0,01 bis 10, insbesondere von 0,1 bis 10 und besonders bevorzugt von 0,5 bis 8 Gew.-%, bezogen auf das PO-Granulat. Als wasserunlösliche anorganische Verbindung wird ein feinteiliges Metalloxid, -carbonat oder -phosphat eingesetzt, besonders bevorzugt sind Tricalciumphosphat, Calciumcarbonat, Magnesiumpyrophosphat, Aluminiumoxid, Zinkcarbonat, Magnesiumcarbonat, Titandioxid oder Kieselerde. Diese wasserunlösliche Verbindung wird in Kombination mit einem ionischen Tensid, z.B. einem Sulfonat oder Sulfat, eingesetzt, oder mit einem nichtionischen Tensid, welches einen hydrophilen und einen hydrophoben Molekülteil aufweist, z.B. einem Ethoxylat von Fettalkoholen, Oxoalkoholen, Alkylphenolen, Aminen oder Amiden, oder einem Copolymeren von Ethylenoxid und Propylenoxid. Geeignete Carboxyl- oder Carboxylat-Gruppen enthaltende Polymerisate sind z.B. Homopolymere der (Meth-)Acrylsäure, Copolymere der (Meth-)Acrylsäure mit Maleinsäure oder der Maleinsäure mit C₂-C₂₂-Olefinen oder Alkalisalze, insbesondere Natriumsalze dieser Polymeren, vorzugsweise mit Molmassen zwischen 10³ und 2·10⁵ g/mol.

Als Treibmittel können entweder organische Flüssigkeiten oder anorganische Gase oder Gemische davon eingesetzt werden. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 Kohlenstoffatomen. Besonders bevorzugt ist n-Butan. Geeignete anorganische Gase sind Stickstoff, Luft, Ammoniak und Kohlendioxid. Für expandierbare PO-Partikel sollten Treibmittel mit höherem Siedepunkt, z.B. Pentan eingesetzt werden.

Das Treibmittel wird in Mengen von vorzugsweise 1 bis 50 Gew.-Teilen, insbesondere 3 bis 30 Gew.-Teilen, bezogen auf 100 Gew.-Teile Polymer, eingesetzt. Die Treibmittelzugabe kann vor oder während des Aufheizens des Reaktorinhalts auf die Entspannungstemperatur erfolgen. Diese sollte 40°C unter bis 20°C über dem Kristallitschmelzpunkt des Polyolefins liegen. Bei den bevorzugten Propylenpolymerisaten arbeitet man bei 110°C bis 180°C, insbesondere bei 120°C bis 160°C.

Je nach Menge und Art des Treibmittels sowie nach der Höhe der Temperatur stellt sich im Reaktor ein Druck ein, der im allgemeinen zwischen 2 und 100 bar liegt.

Zur Herstellung von expandierten PO-Partikeln wird nach Erreichen der Entspannungstemperatur der Reaktor entspannt, wobei die Entspannung zweckmäßigerweise in einen Zwischenbehälter erfolgt, in dem ein Druck von vorzugsweise 0,5 bis 5 bar herrscht. Beim Entspannen des Reaktors erfolgt eine Expansion des treibmittelhaltigen PO-Granulats und es entstehen PO-Schaumpartikel mit einem mittleren Durchmesser von 1 bis 20 mm.

Zur Herstellung von expandierbaren PO-Partikeln nach DE-A 199 50 420 wird der Reaktorinhalt vor dem Entspannen vorzugsweise auf Raumtemperatur abgekühlt.

Die Partikel werden von der wäßrigen Lösung, welche die Hauptmenge des Suspendierhilfsmittels enthält, abgetrennt, gewaschen und getrocknet, wobei vorteilhaft Waschwasser ohne Säurezusatz verwendet werden kann.

Bei einer alternativen Ausführungsform der Erfindung wird das Carboxyl- oder Carboxylat-Gruppen enthaltende Polymerisat nicht bei der Imprägnierung zugesetzt, sondern die vom Suspensionsmedium abgetrennten Partikel werden mit einer vorzugsweise 0,01 bis 20 gew.-%igen wäßrigen Lösung des Polymerisats gewaschen.

Expandierbare PO-Partikel können bei Raumtemperatur mehrere Stunden, in geschlossenen Behältern auch mehrere Wochen, gelagert werden, ohne daß merklich Treibmittelverlust eintritt. Diese Partikel können auf übliche Weise in Druckvorschäumern zu PO-Schaumpartikeln expandiert werden.

Die Schüttdichte der PO-Schaumpartikel liegt zwischen 5 und 400, insbesondere zwischen 10 und 300 g/l. Die Schaumpartikel sind überwiegend geschlossenzellig und besitzen eine Zellzahl von 2 bis 3000 Zellen/mm², vorzugsweise 5 bis 2500 Zellen/mm², insbesondere 10 bis 1500 Zellen/mm².

Die PO-Schaumpartikel können nach üblichen Verfahren mit Wasserdampf oder Heißluft zu Schaumstoff-Formteilen verschweißt werden, welche in der Automobil-, Verpackungs- und Freizeitindustrie Anwendung finden.

### Beispiel

In einem geschlossenen Rührreaktor werden 6000 Teile eines Propylen-Ethylen-Randomcopolymeren mit einem Ethylengehalt von ca. 2 Gew.-%, 400 Teile Calciumcarbonat, 8 Teile eines Blockcopolymeren aus Ethylenoxid und Propylenoxid (Molmasse 8000 g/mol, 80 % Ethylenanteil) und 1 Teil eines Copolymeren aus Maleinsäure und Acrylsäure (Na-Salz, Molmasse 50 000 g/mol, SOKALAN CP 7 der BASF) in 14 000 Teilen Wasser dispergiert. Nach Zugabe von 1400 Teilen Butan wird der Reaktor auf ca. 130°C aufgeheizt. Dabei steigt der Druck auf ca. 20 bar an. Anschließend wird der Inhalt des Reaktors in einen Zwischenbehälter entspannt. Nach Ablassen der flüssigen Phase wird mit Wasser nachgespült. Die getrockneten Schaumpartikel haben eine Schüttdichte von 17 g/l. Sie lassen sich mit Wasserdampf zu stabilen Formteilen verschweißen.

## Patentansprüche

1. Verfahren zur Herstellung von expandierten Polyolefin-Partikeln durch Imprägnieren von Polyolefin-Granulat mit einem flüchtigen Treibmittel in wäßriger Suspension in Gegenwart von mindestens 0,5 Gew.-%, bezogen auf das Polyolefin-Granulat, einer wasserunlöslichen anorganischen Verbindung in Kombination mit einem Tensid als Suspendierhilfsmittel bei erhöhter Temperatur unter Druck und anschließendem Entspannen, **dadurch gekennzeichnet, daß** die Imprägnierung in Gegenwart eines Carboxyl- oder Carboxylat-Gruppen enthaltenden Polymerisats durchgeführt wird.

2. Verfahren zur Herstellung von expandierbaren Polyolefin-Partikeln durch Imprägnieren von Polyolefin-Granulat mit einem flüchtigen Treibmittel in wäßriger Suspension in Gegenwart von mindestens 0,5 Gew.-%, bezogen auf das Polyolefin-Granulat, einer wasserunlöslichen anorganischen Verbindung in Kombination mit einem Tensid als Suspendierhilfsmittel bei erhöhter Temperatur unter Druck, Abkühlen und anschließendem Entspannen, **dadurch gekennzeichnet, daß** die Imprägnierung in Gegenwart eines Carboxyl- oder Carboxylat-Gruppen enthaltenden Polymerisats durchgeführt wird.

3. Verfahren nach Anspruch 1 oder 2, **dadurch gekennzeichnet, daß** das Polymerisat in Mengen von 10⁻³ bis 10⁴ Gew.-%, vorzugsweise von 10⁻² bis 10² Gew.-%, bezogen auf die wasserunlösliche anorganische Verbindung, eingesetzt wird.

4. Verfahren nach Anspruch 1 oder 2, **dadurch gekennzeichnet, daß** das Polymerisat ein Homopolymer der (Meth-)Acrylsäure, ein Copolymer der (Meth-)Acrylsäure mit Maleinsäure oder der Maleinsäure mit einem C₂-C₂₂-Olefin oder ein Alkalisalz dieser Polymeren ist.

5. Verfahren nach Anspruch 1 oder 2, **dadurch gekennzeichnet, daß** die wasserunlösliche anorganische Verbindung ein feinteiliges Metalloxid, -carbonat oder -phosphat ist.

6. Verfahren nach Anspruch 5, **dadurch gekennzeichnet, daß** die wasserunlösliche anorganische Verbindung Tricalciumphosphat, Calciumcarbonat, Magnesiumpyrophosphat, Aluminiumoxid, Zinkcarbonat, Magnesiumcarbonat, Titandioxid oder Kieselerde ist.

7. Verfahren nach dem Oberbegriff der Ansprüche 1 oder 2, **dadurch gekennzeichnet, daß** die expandierten bzw. expandierbaren Polyolefin-Partikel nach der Abtrennung von dem Suspensionsmedium mit einer wäßrigen Lösung eines Carboxyloder Carboxylat-Gruppen enthaltenden Polymerisats gewaschen werden.

## Claims

1. A process for the production of expanded polyolefin beads by impregnating polyolefin granules with a volatile blowing agent in aqueous suspension in the presence of at least 0.5% by weight, based on the polyolefin granules, of a water-insoluble inorganic compound in combination with a surfactant as suspension aid at elevated temperature under pressure followed by decompression, which comprises carrying out the impregnation in the presence of a polymer containing carboxyl or carboxylate groups.

2. A process for the production of expandable polyolefin beads by impregnating polyolefin granules with a volatile blowing agent in aqueous suspension in the presence of at least 0.5% by weight, based on the polyolefin granules, of a water-insoluble inorganic compound in combination with a surfactant as suspension aid at elevated temperature under pressure, and then cooling the beads, followed by decompression, which comprises carrying out the impregnation in the presence of a polymer containing carboxyl or carboxylate groups.

3. A process as claimed in claim 1 or 2, wherein the polymer is employed in amounts of from 10⁻³ to 10⁴% by weight, preferably from 10⁻² to 10²% by weight, based on the water-insoluble inorganic compound.

4. A process as claimed in claim 1 or 2, wherein the polymer is a homopolymer of (meth)acrylic acid, a copolymer of (meth)acrylic acid with maleic acid or of maleic acid with a C₂-C₂₂-olefin, or an alkali metal salt of these polymers.

5. A process as claimed in claim 1 or 2, wherein the water-insoluble inorganic compound is a finely divided metal oxide, metal carbonate or metal phosphate.

6. A process as claimed in claim 5, wherein the water-insoluble inorganic compound is tricalcium phosphate, calcium carbonate, magnesium pyrophosphate, aluminum oxide, zinc carbonate, magnesium carbonate, titanium dioxide or siliceous earth.

7. A process according to the preamble of claim 1 or 2, wherein, after separation from the suspension medium, the expanded or expandable polyolefin beads are washed with an aqueous solution of a polymer containing carboxyl or carboxylate groups.

## Revendications

1. Procédé de préparation de particules de polyoléfine expansées par imprégnation d'un produit de granulation de polyoléfine par un agent gonflant volatil en suspension aqueuse, en présence d'au moins 0,5% en poids, par rapport au produit de granulation de polyoléfine, d'un composé inorganique insoluble dans l'eau, en combinaison avec un agent tensioactif comme adjuvant de suspension, à une température élevée, sous pression et détente ultérieure, **caractérisé en ce que** l'imprégnation est effectuée en présence d'un polymère contenant des groupes carboxyle ou carboxylate.

2. Procédé de préparation de particules de polyoléfine expansibles par imprégnation d'un produit de granulation de polyoléfine par un agent gonflant volatil en suspension aqueuse, en présence d'au moins 0,5% en poids, par rapport au produit de granulation de polyoléfine, d'un composé inorganique insoluble dans l'eau, en combinaison avec un agent tensioactif comme adjuvant de suspension, à une température élevée, sous pression, refroidissement et détente ultérieure, **caractérisé en ce que** l'imprégnation est effectuée en présence d'un polymère contenant des groupes carboxyle ou carboxylate.

3. Procédé suivant l'une des revendications 1 et 2, **caractérisé en ce que** le polymère est mis en oeuvre en des quantités de 10⁻³ à 10⁴ % en poids, de préférence de 10⁻² à 10² % en poids, par rapport au composé inorganique insoluble dans l'eau.

4. Procédé suivant l'une des revendications 1 et 2, **caractérisé en ce que** le polymère est un homopolymère de l'acide (méth)acrylique, un copolymère de l'acide (méth)acrylique avec de l'acide maléique ou de l'acide maléique avec une oléfine en C₂-C₂₂ ou un sel de métal alcalin de ces polymères.

5. Procédé suivant l'une des revendications 1 et 2, **caractérisé en ce que** le composé inorganique insoluble dans l'eau est un oxyde, carbonate ou phosphate de métal finement divisé.

6. Procédé suivant la revendication 5, **caractérisé en ce que** le composé inorganique insoluble dans l'eau est du phosphate tricalcique, du carbonate de calcium, du pyrophosphate de magnésium, de l'oxyde d'aluminium, du carbonate de zinc, du carbonate de magnésium, du dioxyde de titane ou de la silice.

7. Procédé suivant le préambule de l'une des revendications 1 et 2, **caractérisé en ce que** les particules de polyoléfine expansées ou expansibles sont, après la séparation à partir du milieu de suspension, lavées avec une solution aqueuse d'un polymère contenant des groupes carboxyle ou carboxylate.
